# EUROPEAN PATENT SPECIFICATION

(11) **EP 4 043 968 B1**
(45) Date of publication and mention of the grant of the patent: **01.04.2026**
(21) Application number: 21156883.7
(22) Date of filing: 12.02.2021
(51) Int. Cl.: G05B 13/02, G05B 13/04

(54) **SUPPLEMENTING A GIVEN CONTROL STRATEGY FOR A PLANT WITH MACHINE LEARNED INTERVENTIONS**
ERGÄNZUNG EINER GEGEBENEN STEUERUNGSSTRATEGIE FÜR EINE ANLAGE MIT MASCHINELL ERLERNTEN EINGRIFFEN
SUPPLÉMENT D'UNE STRATÉGIE DE COMMANDE DONNÉE POUR UNE INSTALLATION AVEC INTERVENTIONS D'APPRENTISSAGE MACHINE

(43) Date of publication of application: 17.08.2022
(73) Proprietor: ABB Schweiz AG, 5400 Baden (CH)
(72) Inventor: KOTRIWALA, Arzam, 68526 Ladenburg (DE); GAERTLER, Marco, 69221 Dossenheim (DE); DOPPELHAMER, Jens, 68526 Ladenburg (DE); RODRIGUEZ, Pablo, 68549 Ilvesheim (DE); BERNING, Matthias, 67549 Worms (DE); KLOEPPER, Benjamin, 68199 Mannheim (DE); BORRISON, Reuben, 68775 Ketsch (DE); DIX, Marcel, 68167 Mannheim (DE); SCHMIDT, Benedikt, 69117 Heidelberg (DE); ABUKWAIK, Hadil, 69469 Weinheim (DE); MACZEY, Sylvia, 69493 Hirschberg (DE); LINGE, Simon, 72356 Västerås (SE); ZIOBRO, David, 72462 Västerås (SE); SHARMA, Divyasheel, 560048 Bangalore (IN); K R, Chandrika, 560078 Bangalore (IN); GOPALAKRISHNAN, Gayathri, 17171 Solna (SE)
(74) Representative: Maiwald GmbH

(56) References cited:
- EP-A1- 3 764 173
- US-A1- 2003 028 265
- US-A1- 2017 346 337
- US-A1- 2020 192 340

## Description

### FIELD OF THE INVENTION

The present invention relates to automated control of industrial plants, and in particular plants with a distributed control system.

### BACKGROUND

Automated control of industrial plants is usually performed according to an engineered control strategy that is to conduct normal operation of the plant in an efficient manner. However, such an engineered control strategy cannot foresee all situations that might arise during operation of the plant. In such situations, a plant operator may manually intervene and take control of the plant or a part thereof, overriding the engineered control strategy.

WO 2012/142 353 A1 discloses a method for monitoring a process control system. The method comprises visualizing key performance indicators, KPI, of the plant that are unsatisfactory.

US 2003/028 265 A1 discloses a method for controlling a non-linear process including the steps of first providing a controller that is operable to receive inputs representing measured variables of the process and predicting on an output of the controller predicted control values for manipulatible variables that control the process. An expert system is provided that models the actions of an operator of the process that represents a set of rules for actions to be taken by an operator upon the occurrence of predetermined conditions in the operation of the process.

EP 3 764 173 A1 discloses a method for controlling an industrial process that comprises predicting the propensity of a watching human operator to at least partially override the control outputs delivered by the process controller and taking action to reduce this propensity.

US 2017/346 337 A1 discloses a method for controlling a power supply that comprises dynamically changing a given control strategy by means of a machine learning model.

US 2020/192 340 A1 discloses a plant controller for an industrial plant that is trainable with reinforcement learning.

### OBJECTIVE OF THE INVENTION

It is an objective of the invention to reduce the need for manual interventions during operation of an industrial plant.

This objective is achieved by a first computer-implemented method for controlling an industrial plant or part thereof according to claim 9, and by a computer-implemented method for training a machine learning model for use in the first method according to claim 1.

### DISCLOSURE OF THE INVENTION

The invention is defined by the appended claims. Embodiments and examples not covered by the claims are presented to illustrate, and facilitate the understanding of, the claimed invention.

The invention provides a computer-implemented method for controlling an industrial plant or part thereof. The method starts from a situation where a given control strategy is available for the plant. This control strategy maps a current state of the plant, which may be characterized by any number of variables, to one or more actions that modify the behavior of the plant or any part thereof.

The control strategy corresponds to the implemented control logic of one or more controllers in the plant. For example, these controllers may be organized in a distributed control system, DCS. The scope of a control strategy may comprise smaller or larger segments of a plant, a plant as a whole, or even multiple plants.

In the course of the method, a set of state variables that characterize the present state of the plant is acquired. From these state variables or a subset thereof, a trained machine learning model determines whether a next action that modifies the behavior of the plant is to be obtained
- from the given control strategy only,
- from a machine learning model only, or
- from both the given control strategy and the machine learning model.

In response to determining that the next action is to be obtained from the given control strategy only, the state variables or a subset thereof are mapped to this next action by the given control strategy. This is the normal operating state of the plant, in which the plant can be expected to run for most of the time.

In response to determining that the next action is to be obtained from a machine learning model only, the state variables or a subset thereof are mapped to this next action by the machine learning model. In response to determining that the next action is to be obtained from both the given strategy and the machine learning model,
- the state variables or a subset thereof are mapped to a first component of the next action by the given control strategy,
- the state variables or a subset thereof are also mapped to a second component of the next action by the machine learning model, and
- the first component and the second component are aggregated to form the next action.

The determined next action is supplied to the industrial plant or any part thereof for execution.

The machine learning model may be any function whose behavior is tunable using a set of parameters, and that has a great power to generalize. In particular, the machine learning model may comprise, or be, a neural network. The machine learning model may, for example, be deployed as part of a distributed control system in the form of a separate software component that is installed on-premise on an industrial PC or controller, or in the cloud. Likewise, training of the machine learning model may also happen on-premise or in the cloud.

If the next action is to be determined at least partially by the machine learning model, this corresponds to an operating state that is somehow out of the ordinary with respect to the given control strategy. In this kind of situations, a human operator who oversees the plant would be likely to take over control of the plant or at least part thereof. For example, the human operator might try to guide the plant on a trajectory that leads back to a state where it may again be controlled according to the given control strategy. Using a machine learning model in the place of the human operator provides the benefit that the handling of the plant in situations that do not fit the given control strategy may be fully automated. This reduces or even eliminates a need for a human operator to constantly pay attention to the state of the industrial plant.

In addition, when choosing a next action to be performed, the machine learning model has a much wider choice than a human operator would have. A human operator may only take over control for a limited time. Therefore, it is a somewhat dominating goal to return the plant or part thereof to the state where it may be controlled by the given control strategy again. If a machine learning model is used, there is no limit as to how long this may remain in control. Therefore, the machine learning model may guide the plant or part thereof on a different course where a quick return to control by the given control strategy is a lesser priority.

For example, if a waste incineration plant is automatically controlled, one of the goals pursued by the given control strategy may be to avoid the buildup of soot in the furnace where the waste is burned because cleaning the soot out of the furnace requires a shutdown of the plant and is expensive. If something unexpected happens and a human operator takes over control, this human operator's strategy may bring the plant back to automated control according to the given control strategy quickly, but the plant may pass through a part of the state space where an excessive buildup of soot in the furnace occurs. Therefore, each event where a human operator needs to take control may make a "debit" on the remaining operating time of the plant until the next shutdown and cleaning of the furnace is required. Control based on the machine learning model may be performed with the primary objective of avoiding the buildup of soot as much as possible, at the price of moving back to a state where the given control strategy may take over again much more slowly.

It is not even mandatory that control based on the machine learning model needs to strive towards returning control to the given control strategy. Rather, the control system may be designed from the start to assign control of the plant to the given control strategy in a first kind of situations, and to the machine learning model in a second kind of situations, with no limitation as to how long the machine learning model may be at the helm continuously. That is, the role of the machine learning model may go beyond a mere backup for unexpected situations that the given control strategy is unable to fully handle. Rather, the machine learning model and the given control strategy may become equal peers: The given control strategy is used for the situations that may easily be cast into such a control strategy, whereas the machine learning model is used for the situations that are hard to cast into a fixed control strategy. This reduces the overall effort required to implement automated control for the plant.

In one embodiment, a first machine learning model is used to determine from where (i.e., control strategy only, machine learning model, or control strategy and machine learning model) the next action is to be obtained. To the extent that the next action is to be obtained from a machine learning model, it is obtained from a second machine learning model. In this manner, the first machine learning model may specialize on the classification whether the given control strategy is to be departed from wholly or partially. The second machine learning model may then determine the concrete contribution that is to augment, or to at least partially supersede, the output of the given control strategy.

In another embodiment, one single machine learning model is used to obtain a second component of the next action as well as whether and to which extent this is to be aggregated with a first component of the next action obtained from the given control strategy. The indication whether and to which extent the second component is to be aggregated with the first component may take any suitable form. For example, the machine learning model may produce, in addition to the second component, a further output may be produced that indicates whether, and to which extent, this shall augment or supersede the first component. In another example, the second component may be aggregated with the first component according to a fixed formula, and the weight of the second component may be encoded into the second component itself. For example, in a situation where the next action is to be obtained from the given control strategy only, the single machine learning model may output a null second component.

The first component and the second component may be aggregated according to any strategy that is appropriate for the concrete application at hand. For example, it may be a part of this strategy to form a weighted sum of the first component and second component. Alternatively or in combination, in another example, it may be a part of this strategy to keep portions of the first component that are not superseded by corresponding portions of the second component in the aggregated next action. The appropriate strategy for the aggregation may, inter alia, depend on the scopes of the given strategy and the machine learning model. For example, if the given control strategy covers the plant as a whole, but the machine learning model covers only a section of the plant or single device in the plant, it may be appropriate to keep the portions of the first component that have not been superseded by corresponding portions of the second component.

In a particularly advantageous embodiment, the trained machine learning model is chosen from a plurality of trained machine learning models based on a predetermined objective for the plant as a whole or any part thereof. In the example of the waste incineration plant, one such objective may comprise minimizing the use of at least one fuel-powered burner that is to supplement the combustion of the to-be-incinerated waste, so as to reduce the cost of fuel and process the waste in a more economical manner. Another objective may be to minimize a buildup of soot and/or another contaminant in a furnace during incineration of the waste in this furnace. These objectives may be at least partially conflicting. For example, if too little fuel is being used to supplement the combustion, certain kinds of waste may not burn up completely, and soot may accumulate. Removing this soot may be more expensive than the saved fuel would have been. So there may be also an aggregated objective to run the waste incineration plant in a most economical manner. For most waste incineration plants, this aggregate objective may be appropriate. But for an otherwise identical waste incineration plant in a remote site where the supply of fuel is limited, it may be an essential objective to make do with the available quantity of fuel until the next shipment of fuel arrives.

The methods are also applicable to plants from many other domains in the process industry in general. For example, the plant may be a power plant, a chemical plant, or an oil or gas production plant and/or refinery.

The invention also provides a computer-implemented method for training a machine learning model for use in the method described above.

In the course of this method, training records of state variables that characterize states of an industrial plant or a part thereof. These states may, for example, be actual past states of the plant or part thereof that have been logged by a historian in the plant. In another example, the states may be simulated states that have been obtained from a simulation model of the plant or part thereof. The training records are not limited to being collected all in one and the same instance of the plant of part thereof. Rather, training records may be collected from a fleet of multiple instances of the plant or part thereof, to the extent that these different instances are comparable. For example, waste incineration plants may differ in size and in the compositions of the waste that is to be processed, but the basic process remains the same.

Labels are provided as to whether, in response to the states contained in the respective training records, a given normal control strategy should be departed from, and if so, which action that modifies the behavior of the plant or any part thereof should be taken. For example, if the training records have been obtained based on a simulation model of the plant, this simulation model may also be used to determine how the state of the plant will evolve if certain actions are taken. If the training records characterize past states of the industrial plant or part thereof, the labels may specifically indicate whether a plant operator has taken over manual control of the plant, and if so, which action that modifies the behavior of the plant or any part thereof this operator has taken. In this manner, knowledge and experience of the plant operator may be incorporated into the training process.

By means of the to-be-trained machine learning model, the training records are mapped to predictions whether a normal control strategy will be departed from, and if so, which action that modifies the behavior of the plant or any part thereof will be taken. According to a predetermined cost function, it is then rated how well the prediction by the machine learning model corresponds to the label of the respective training record. Parameters that characterize the behavior of the machine learning model are optimized towards the goal that when further training records are processed by the machine learning model, this will result in a better rating by the cost function.

This training exploits the power of the machine learning model to generalize. Just as even two digital photographs of a scenery that were shot in immediate succession will not be bit-identical, it is highly improbable that a set of state variables acquired during normal operation of the plant will exactly correspond to a training record of state variables, so that it may be directly looked up what to do. Rather, every situation during normal operation will be an unseen situation. The power to generalize means that the machine learning model is able to handle such unseen situations based on a training with a finite set of training records, provided that there is sufficient variability among those training records.

The training is not required to start from scratch, e.g., from a random initialization of the parameters. Rather, it may start from values of the parameters that have already been pre-trained. For example, a generic pre-training may be performed for a certain kind of plant of part thereof, and this may be followed by a more specific training according to the concrete use to which an instance of the plant or part thereof is to be put.

In a particularly advantageous embodiment, the actions indicated by the labels are selected and/or weighted according to how beneficial they are towards a predetermined objective for the plant as a whole or any part thereof. In this manner, the machine learning model may be trained to this particular objective. For example, based on one and the same set of training records of past states, the machine learning model may be trained towards different objectives. Also, it may be accommodated in this manner that not all past actions of the human operator have proved beneficial. The degree to which each action is deemed to be beneficial may, for example, be rated by a cost function that measures the benefit of the action using any suitable method. The cost function may, for example, be provided by an expert in the domain of application. This cost function is not to be confused with the loss function that is used to match the outputs of the machine learning model to the labels associated with the training records and sometimes also termed "cost function".

An expert for the domain of application may also, for example, directly label actions as beneficial or not, without going through a cost function first.

In particular, it may be evaluated from past and/or simulated records of the behavior that the plant or part thereof has shown in response to an action how beneficial this action is towards the predetermined objective. In this manner, a large set of past operator actions may be distilled to yield the subset of actions from which the machine learning model can learn something useful for future operation of the plant or part thereof. The benefit of an action may be determined according to any suitable metric and using any suitable signal. For example, in a production process, the yield, or the production of waste, may be evaluated to assess the overall efficiency of the industrial process.

In a further advantageous embodiment, an action in a label may be aggregated and/or extrapolated from past and/or simulated actions and their beneficial effects towards the predetermined objective. Aggregating several past and/or simulated actions and/or beneficial effects may reduce noise in the data. For example, actions may be grouped into different modes or strategies of operation. Extrapolating from several past and/or simulated actions and/or beneficial effects may be used to augment the training data set.

Examples for predetermined objectives to which the machine learning model may be trained, or according to which a trained machine learning model may be chosen, include:
- returning the plant or part thereof to a state where it may be controlled by the given control strategy again;
- minimizing the cost of operating of the plant or part thereof;
- minimizing the consumption of energy, fuel or another consumable during operation of the plant or part thereof;
- minimizing the number of alarms raised by the plant or part thereof;
- minimizing the emission of at least one pollutant or other waste from the plant or part thereof; and
- maximizing the remaining service life of the plant or part thereof, and/or the remaining time until a next maintenance or downtime of the plant or part thereof is due.

Both during training of the machine learning model and during the controlling of the plant or part thereof using the trained model, the action that modifies the behavior of the plant or part thereof specifically comprises one or more of:
- setting a set-point of a low-level controller that controls the plant or any part thereof with the goal of keeping at least one state variable of the plant or part thereof at or near the set-point;
- starting up or shutting down a piece of equipment in the plant; and
- opening or closing a valve or throttle.

In particular, in a distributed control system, a superordinate controller for the process as a whole may orchestrate the operation of the plant by setting set-points of low-level controllers that control certain parts of aspects of the plant. For example, the superordinate controller may instruct to set or keep the temperature in a vessel at a certain temperature, and it may be the job of a low-level controller to orchestrate how to accomplish this. For example, the low-level controller may control a heating element, a cooling element, or the opening and closing of valves to mix the current contents of the vessel with warmer or cooler material.

Likewise, once it has been decided that a piece of equipment is to be started up or shut down, the following of a required startup or shutdown protocol may be orchestrated by a subordinate controller.

The computer implementation of the methods described above implies that the methods may be embodied in a computer program. The invention therefore also provides a computer program with machine-readable instructions that, when executed by one or more computers, cause the one or more computers to perform one of the methods described above. The invention also provides a non-transitory machine-readable storage medium, and/or a download product, with the computer program. A download product is a product that may be sold in an online shop for immediate fulfillment by download. The invention also provides one or more computers with the computer program, and/or with the non-transitory machine-readable storage medium and/or download product.

### DESCRIPTION OF THE FIGURES

In the following, the invention is illustrated using Figures without any intention to limit the scope of the invention. The Figures show:
Figure 1: Exemplary embodiment of the method 100 for controlling an industrial plant 1;
Figure 2: Exemplary embodiment of the method 200 for training a machine learning model 5, 5a, 5b for use in the method 100.

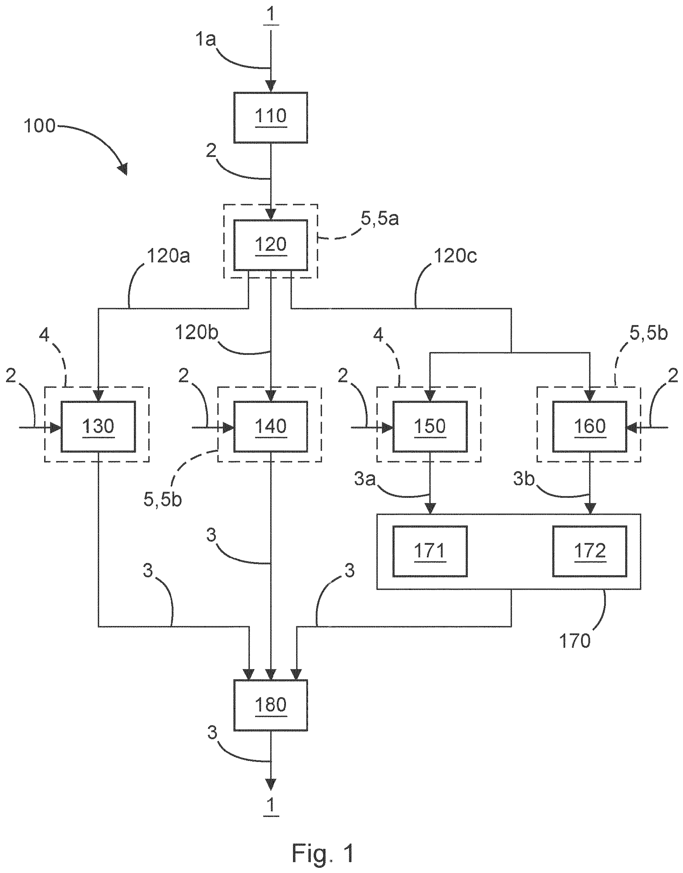

Figure 1 is a schematic flow chart of an embodiment of the method 100 for controlling an industrial plant 1. In step 110, a set of state variables 2 that characterize the present state 1a of the plant 1 is acquired. In step 120, it is determined, by a trained machine learning model 5, 5a, from the state variables or a subset thereof, whether a next action 3 that modifies the behavior of the plant is obtained
- from the given control strategy 4 only (branch 120a), in which case the state variables 2 or a subset thereof are mapped to the next action 3 by the given control strategy 4 in step 130;
- from a machine learning model 5, 5b only (branch 120b), in which case the state variables 2 or a subset thereof are mapped to the next action 3 by the machine learning model 5, 5b; or
- from both the given control strategy 4 and the machine learning model 5, 5b (branch 120c), in which case
   ∘ the state variables 2 or a subset thereof are mapped to a first component 3a of the next action 3 by the given control strategy 4 in step 150;
   ∘ the state variables 2 or a subset thereof are mapped to a second component 3b by the machine learning model 5, 5b in step 160, and
   ∘ the first component 3a and the second component 3b are aggregated to form the next action 3b in step 170.

In one embodiment, a first machine learning model 5a is used to determine from where the next action 3 is to be obtained, and to the extent that the next action 3 is to be obtained from a machine learning model 5, 5b, it is obtained from a second machine learning model 5b.

In another embodiment, one single machine learning model 5 is used to obtain a second component 3b of the next action 3 as well as whether and to which extent this is to be aggregated with a first component 3a of the next action 3 obtained from the given control strategy 4.

Irrespective of the path on which the next action 3 was obtained, this next action 3 is supplied to the industrial plant 1 or any part thereof for execution in step 180.

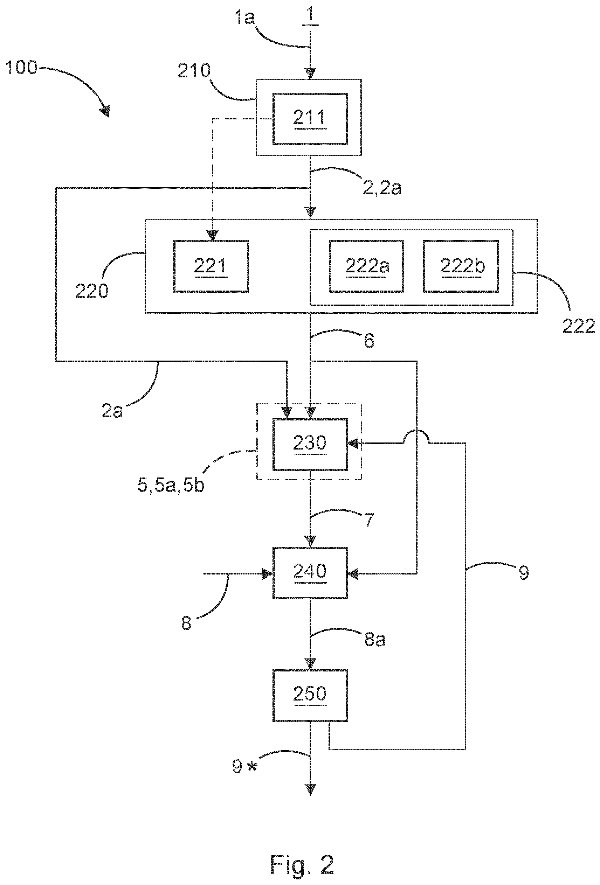

Figure 2 is a schematic flow chart of an embodiment of the method 200 for training a machine learning model 5, 5a, 5b for use in the method 100.

In step 210, training records 2a of state variables 2 are provided. These state variables 2 characterize states 1a of an industrial plant 1 or a part thereof. In step 220, labels 6 are provided as to whether, in response to said states 1a, a given normal control strategy 4 should be departed from, and if so, which action 3 that modifies the behavior of the plant 1 or any part thereof should be taken.

In particular, the training records 2a may characterize past states 1a of the industrial plant or part thereof according to block 211. According to block 221, the labels 6 may then specifically indicate whether a plant operator has taken over manual control of the plant 1, and if so, which action 3 that modifies the behavior of the plant 1 or any part thereof this operator has taken.

According to block 222, the actions 3 indicated by the labels 6 may be selected and/or weighted according to how beneficial they are towards a predetermined objective for the plant 1 as a whole or any part thereof. In particular, according to block 222a, it may be evaluated from past and/or simulated records of the behavior that the plant or part thereof has shown in response to an action 3 how beneficial this action 3 is towards the predetermined objective. Alternatively or in combination, according to block 222b, the action 3 in a label 6 may be aggregated and/or extrapolated from past and/or simulated actions and their beneficial effects towards the predetermined objective.

In step 230, by means of a machine learning model 5 (or two respective machine learning models 5a and 5b), the training records 2a are mapped to predictions 7
- whether a normal control strategy 4 will be departed from; and
- if so, which action 3 that modifies the behavior of the plant 1 or any part thereof will be taken.

In step 240, it is rated, using a predetermined cost function 8, how well the prediction 7 by the machine learning model 5, 5a, 5b corresponds to the label 6 of the respective training record 2a. In step 250, parameters 9 that characterize the behavior of the machine learning model 5, 5a, 5b towards the goal that when further training records 2a are processed by the machine learning model 5, 5a, 5b, this will result in a better rating 8a by the cost function 8. That is, the processing of training records 2a in step 230 is continued with the updated parameters 9, and it is then evaluated whether this results in a change for the better or not. This may be continued until a predetermined termination criterion is met. The finally trained state of the parameters 9 is labelled with the reference sign 9*.

### List of reference signs

- 1: industrial plant
- 1a: state of plant 1
- 2: state variables, characterize state 1a
- 2a: training record of state variables 2
- 3: action that modifies behavior of plant 1 or part thereof
- 3a: first component of action 3
- 3b: second component of action 3
- 4: given control strategy
- 5: single machine learning model
- 5a: first machine learning model to choose source of action 3
- 5b: second machine learning model to determine second component 3b
- 6: labels for training records 2a
- 7: predictions by machine learning model 5, 5a, 5b
- 8: cost function for training of machine learning model 5, 5a, 5b
- 9: parameters, characterize behavior of machine learning model 5, 5a, 5b
- 9*: finally trained state of parameters 9
- 100: method for controlling industrial plant 1 or part thereof
- 110: acquiring set of state variables 2;
- 120: determining source of next action 3;
- 120a: determine given control strategy 4 as source;
- 120b: determine machine learning model 5, 5b as source;
- 120c: determine machine learning model 5, 5b, strategy 4 as joint sources
- 130: mapping state variables 2 to action 3 by given control strategy 4
- 140: mapping state variables 2 to action 3 by machine learning model 5, 5b
- 150: mapping state variables 2 to component 3a by given control strategy 4
- 160: mapping state variables 2 to component 3b by model 5, 5b
- 170: aggregating components 3a and 3b to form action 3
- 171: forming weighted sum of components 3a and 3b
- 172: keeping not superseded portions of first component 3a
- 180: supplying next action 3 to plant 1 or part thereof for execution
- 200: method for training machine learning model 5, 5a, 5b
- 210: providing training records 2a of state variables 2
- 220: providing labels for training records 2a
- 221: indication of manual intervention in labels 6
- 222: selecting and/or weighting actions 3 according to benefit
- 222a: evaluating benefit from post-action plant behavior
- 222b: aggregating and/or extrapolating actions 3
- 230: mapping training records 2a to predictions 7
- 240: rating predictions 7 by means of cost function 8
- 250: operating parameters 9 of machine learning model 5, 5a, 5b

## Claims

1. A computer-implemented method (200) for training a machine learning model (5, 5a, 5b) for predicting whether a given normal control strategy (4) of an industrial plant (1) that maps a current state (1a) of the plant (1) to one or more actions (3) that modify the behavior of the plant (1) or any part thereof shall be departed from, and if so, which action (3) that modifies the behavior of the plant (1) or any part thereof shall be taken, the method comprising the steps of:
• providing (210) training records (2a) of state variables (2) that characterize states (1a) of an industrial plant (1) or a part thereof;
• providing (220) labels (6) as to whether, in response to said states (1a), a given normal control strategy (4) should be departed from, and if so, which action (3) that modifies the behavior of the plant (1) or any part thereof should be taken, wherein the actions (3) indicated by the labels (6) are selected and/or weighted (222) according to how beneficial they are towards a predetermined objective for the plant (1) as a whole or any part thereof;
• mapping (230), by the machine learning model (5, 5a, 5b), the training records (2a) to predictions (7) whether a normal control strategy (4) will be departed from, and if so, which action (3) that modifies the behavior of the plant (1) or any part thereof will be taken;
• rating (240), by means of a predetermined cost function (8), how well the prediction (7) by the machine learning model (5, 5a, 5b) corresponds to the label (6) of the respective training record (2a); and
• optimizing (250) parameters (9) that characterize the behavior of the machine learning model (5, 5a, 5b) towards the goal that when further training records (2a) are processed by the machine learning model (5, 5a, 5b), this will result in a better rating (8a) by the cost function (8).

2. The method (200) of claim 1, wherein the training records (2a) characterize past states (1a) of the industrial plant (1) or part thereof, and the labels (6) specifically indicate (221) whether a plant operator has taken over manual control of the plant (1), and if so, which action (3) that modifies the behavior of the plant (1) or any part thereof this operator has taken.

3. The method (200) of any one of claims 1 to 2, wherein it is evaluated (222a) from past and/or simulated records of the behavior that the plant (1) or part thereof has shown in response to an action (3) how beneficial this action (3) is towards the predetermined objective.

4. The method (200) of any one of claims 1 to 3, wherein the action (3) in a label (6) is aggregated and/or extrapolated (222b) from past and/or simulated actions and their beneficial effects towards the predetermined objective.

5. The method (200) of any one of claims 1 to 4, wherein the predetermined objective specifically comprises one or more of:
• returning the plant (1) or part thereof to a state where it may be controlled by the given control strategy (4) again;
• minimizing the cost of operating of the plant (1) or part thereof;
• minimizing the consumption of energy, fuel or another consumable during operation of the plant (1) or part thereof;
• minimizing the number of alarms raised by the plant (1) or part thereof;
• minimizing the emission of at least one pollutant or other waste from the plant (1) or part thereof; and
• maximizing the remaining service life of the plant (1) or part thereof, and/or the remaining time until a next maintenance or downtime of the plant (1) or part thereof is due.

6. The method (200) of any one of claims 1 to 5, wherein the action (3) that modifies the behavior of the plant (1) or part thereof specifically comprises one or more of:
• setting a set-point of a low-level controller that controls the plant (1) or any part thereof with the goal of keeping at least one state variable (2) of the plant (1) or part thereof at or near the set-point;
• starting up or shutting down a piece of equipment in the plant (1); and
• opening or closing a valve or throttle.

7. The method (200) of any one of claims 1 to 6, wherein the industrial plant (1) specifically comprises a waste incineration plant, a power plant, a chemical plant, or an oil or gas production plant and/or refinery.

8. The method (200) of claim 7 and additionally any one of claims 1 to 5, wherein the predetermined objective comprises one or more of:
• minimizing the use of at least one fuel-powered burner that is to supplement the combustion of the to-be-incinerated waste; and
• minimizing a buildup of soot and/or another contaminant in a furnace during incineration of the waste in this furnace.

9. The method (100, 200) of any one of claims 1 to 8, further comprising the steps of, based on one or more machine learning models (5, 5a, 5b) trained in the course of the method (200):
• acquiring (110) a set of state variables (2) that characterize the present state (1a) of the plant (1);
• determining (120), by a trained machine learning model (5, 5a), from the state variables (2) or a subset thereof, whether a next action (3) that modifies the behavior of the plant (1) is to be obtained from the given control strategy (4) only, from a machine learning model (5, 5b) only, or from both the given control strategy (4) and the machine learning model (5, 5b);
• in response to determining (120a) that the next action (3) is to be obtained from the given control strategy (4) only, mapping (130) the state variables (2) or a subset thereof to this next action (3) by the given control strategy (4);
• in response to determining (120b) that the next action (3) is to be obtained from a machine learning model only, mapping (140) the state variables (2) or a subset thereof to this next action (3) by the machine learning model (5, 5b);
• in response to determining (120c) that the next action (3) is to be obtained from both the given strategy (4) and the machine learning model (5, 5b),
∘ mapping (150) the state variables (2) or a subset thereof to a first component (3a) of the next action (3) by the given control strategy (4),
∘ mapping (160) the state variables (2) or a subset thereof to a second component (3b) of the next action (3) by the machine learning model (5, 5b), and
∘ aggregating (170) the first component (3a) and the second component (3b) to form the next action (3); and
• supplying (180) the determined next action (3) to the industrial plant (1) or any part thereof for execution,
wherein the trained machine learning model (5, 5b) is chosen from a plurality of trained machine learning models based on a predetermined objective for the plant as a whole or any part thereof.

10. The method (100) of claim 9, wherein a first machine learning model (5a) is used to determine from where the next action (3) is to be obtained, and to the extent that the next action (3) is to be obtained from a machine learning model (5, 5b), it is obtained from a second machine learning model (5b).

11. The method (100) of claim 9, wherein one single machine learning model (5) is used to obtain a second component (3b) of the next action (3) as well as whether and to which extent this is to be aggregated with a first component (3a) of the next action (3) obtained from the given control strategy (4).

12. The method (100) of any one of claims 9 to 11, wherein the aggregating (170) of the first component (3a) and the second component (3b) comprises:
• forming (171) a weighted sum of the first component (3a) and second component (3b); and/or
• keeping (172) portions of the first component (3a) that are not superseded by corresponding portions of the second component (3b) in the aggregated next action (3).

13. A computer program, comprising machine-readable instructions that, when executed by one or more computers, cause the one or more computers to perform a method (100, 200) of any one of claims 1 to 12.

14. A non-transitory machine-readable storage medium, and/or a download product, with the computer program of claim 13.

15. One or more computers with the computer program of claim 13, and/or with the non-transitory storage medium and/or download product of claim 14.

## Patentansprüche

1. Ein computerimplementiertes Verfahren (200) zum Trainieren eines Machine Learning-Modells (5, 5a, 5b) zum Vorhersagen, ob von einer vorgegebenen normalen Steuerungsstrategie (4) einer Industrieanlage (1) abgewichen werden soll, die einen aktuellen Zustand (1a) der Anlage (1) auf eine oder mehrere Aktionen (3) abbildet, die das Verhalten der Anlage (1) oder eines Teils davon modifizieren, und wenn ja, welche Aktion (3) zur Änderung des Verhaltens der Anlage (1) oder eines Teils davon ergriffen werden soll, wobei das Verfahren die folgenden Schritte umfasst:
• Bereitstellen (210) von Trainings-Records (2a) von Zustandsvariablen (2), die Zustände (1a) einer Industrieanlage (1) oder eines Teils davon charakterisieren;
• Bereitstellen (220) von Labels (6) dazu, ob in Antwort auf die Zustände (1a) von einer vorgegebenen normalen Steuerungsstrategie (4) abgewichen werden soll und, wenn ja, welche Maßnahme (3) zur Änderung des Verhaltens der Anlage (1) oder eines Teils davon zu ergreifen ist, wobei die durch die Labels (6) angegebenen Maßnahmen (3) entsprechend ihrem Nutzen für ein vorgegebenes Ziel für die Anlage (1) als Ganzes oder einen Teil davon ausgewählt und/oder gewichtet (222) werden;
• Abbilden (230) der Trainings-Records (2a) auf Vorhersagen (7), ob von einer normalen Steuerungsstrategie (4) abgewichen wird und, wenn ja, welche Maßnahme (3) zur Änderung des Verhaltens der Anlage (1) oder eines Teils davon ergriffen wird, durch das Machine Learning-Modell (5, 5a, 5b);
• Bewerten (240) anhand einer vorbestimmten Kostenfunktion (8), wie gut die Vorhersage (7) durch das Machine Learning-Modell (5, 5a, 5b) mit dem Label (6) des jeweiligen Trainings-Records (2a) übereinstimmt; und
• Optimieren (250) von Parametern (9), die das Verhalten des maschinellen Lernmodells (5, 5a, 5b) charakterisieren, auf das Ziel, dass die Verarbeitung weiterer Trainings-Records (2a) durch das Machine Learning-Modell (5, 5a, 5b) zu einer besseren Bewertung (8a) durch die Kostenfunktion (8) führt.

2. Verfahren (200) nach Anspruch 1, wobei die Trainingsdatensätze (2a) vergangene Zustände (1a) der Industrieanlage (1) oder eines Teils davon charakterisieren und die Labels (6) speziell angeben (221), ob ein Anlagenbetreiber die manuelle Steuerung der Anlage (1) übernommen hat und wenn ja, welche Maßnahme (3) zur Änderung des Verhaltens der Anlage (1) oder eines Teils davon dieser Bediener ergriffen hat.

3. Verfahren (200) nach einem der Ansprüche 1 bis 2, wobei anhand vergangener und/oder simulierter Datensätze des Verhaltens, das die Anlage (1) oder ein Teil derselben als Reaktion auf eine Maßnahme (3) gezeigt hat, bewertet wird (222a), inwieweit diese Maßnahme (3) für das vorgegebene Ziel von Vorteil ist.

4. Verfahren (200) nach einem der Ansprüche 1 bis 3, wobei die Aktion (3) in einem Label (6) aus vergangenen und/oder simulierten Aktionen und deren positiven Auswirkungen auf das vorgegebene Ziel aggregiert und/oder extrapoliert (222b) wird.

5. Verfahren (200) nach einem der Ansprüche 1 bis 4, wobei das vorgegebene Ziel speziell eines oder mehrere der folgenden umfasst:
• die Anlage (1) oder einen Teil davon in einen Zustand zurückzuversetzen, in dem sie wieder durch die vorgegebene Steuerungsstrategie (4) gesteuert werden kann;
• die Betriebskosten der Anlage (1) oder eines Teils davon zu minimieren;
• den Verbrauch von Energie, Brennstoff oder anderen Verbrauchsmaterialien während des Betriebs der Anlage (1) oder eines Teils davon zu minimieren;
• die Anzahl der von der Anlage (1) oder einem Teil davon ausgelösten Alarme zu minimieren;
• die Emission mindestens eines Schadstoffs oder anderer Abfälle aus der Anlage (1) oder einem Teil davon zu minimieren; und
• die verbleibende Lebensdauer der Anlage (1) oder eines Teils davon, und/oder die verbleibende Zeit bis zur nächsten Wartung oder Stillstandszeit der Anlage (1) oder eines Teils davon zu maximieren.

6. Verfahren (200) nach einem der Ansprüche 1 bis 5, wobei die Maßnahme (3), die das Verhalten der Anlage (1) oder eines Teils davon modifiziert, speziell eine oder mehrere der folgenden umfasst:
• einen Sollwert eines Low-Level-Reglers, der die Anlage (1) oder einen Teil davon mit dem Ziel steuert, mindestens eine Zustandsvariable (2) der Anlage (1) oder eines Teils davon auf oder nahe dem Sollwert zu halten, einzustellen;
• ein Gerät in der Anlage (1) hochzufahren oder herunterzufahren; und
• ein Ventil oder eine Drosselklappe zu öffnen oder zu schließen.

7. Verfahren (200) nach einem der Ansprüche 1 bis 6, wobei die Industrieanlage (1) spezifisch eine Müllverbrennungsanlage, ein Kraftwerk, eine Chemiefabrik oder eine Öl- oder Gasförderanlage und/oder Raffinerie umfasst.

8. Verfahren (200) nach Anspruch 7 und zusätzlich einem der Ansprüche 1 bis 5, wobei das vorgegebene Ziel eines oder mehrere der folgenden umfasst:
• den Einsatz mindestens eines brennstoffbetriebenen Brenners, der die Verbrennung des zu verbrennenden Abfalls ergänzt, zu minimieren; und
• die Ansammlung von Ruß und/oder anderen Verunreinigungen in einem Ofen während der Verbrennung des Abfalls in diesem Ofen zu minimieren.

9. Verfahren (100, 200) nach einem der Ansprüche 1 bis 8, das zusätzlich die folgenden Schritte umfasst, basierend auf einem oder mehreren Machine Learning-Modellen (5, 5a, 5b), die im Verlauf des Verfahrens (200) trainiert wurden:
• Erfassen (110) eines Satzes von Zustandsvariablen (2), die den aktuellen Zustand (1a) der Anlage (1) charakterisieren;
• Ermitteln (120), ob eine nächste Aktion (3), die das Verhalten der Anlage (1) modifiziert, nur aus der vorgegebenen Steuerungsstrategie (4), nur aus einem Machine Learning-Modell (5, 5b) oder sowohl aus der vorgegebenen Steuerungsstrategie (4) als auch aus dem Machine Learning-Modell (5, 5b) erhalten werden soll, aus den Zustandsvariablen (2) oder einer Teilmenge davon durch ein trainiertes Machine Learning-Modell (5, 5a);
• als Reaktion auf die Feststellung (120a), dass die nächste Aktion (3) nur aus der vorgegebenen Steuerungsstrategie (4) erhalten werden soll, Abbilden (130) der Zustandsvariablen (2) oder einer Teilmenge davon auf diese nächste Aktion (3) durch die vorgegebene Steuerungsstrategie (4);
• als Reaktion auf die Feststellung (120b), dass die nächste Aktion (3) nur aus einem Machine Learning-Modell erhalten werden soll, Abbilden (140) der Zustandsvariablen (2) oder einer Teilmenge davon auf diese nächste Aktion (3) durch das Machine Learning-Modell (5, 5b);
• als Reaktion auf die Feststellung (120c), dass die nächste Aktion (3) sowohl aus der gegebenen Strategie (4) als auch aus dem Machine Learning-Modell (5, 5b) erhalten werden soll,
∘ Abbilden (150) der Zustandsvariablen (2) oder einer Teilmenge davon auf eine erste Komponente (3a) der nächsten Aktion (3) durch die vorgegebene Steuerungsstrategie (4),
∘ Abbilden der Zustandsvariablen (2) oder einer Teilmenge davon auf eine zweite Komponente (3b) der nächsten Aktion (3) durch das Machine Learning-Modell (5, 5b), und
∘ Aggregieren (170) der ersten Komponente (3a) und der zweiten Komponente (3b), um die nächste Aktion (3) zu bilden; und
• Bereitstellen (180) der ermittelten nächsten Aktion (3) an die Industrieanlage (1) oder einen Teil davon zur Ausführung,
wobei das trainierte Machine Learning-Modell (5, 5b) aus einer Vielzahl von trainierten Machine Learning-Modellen auf der Grundlage eines vorbestimmten Ziels für die Anlage als Ganzes oder einen Teil davon ausgewählt wird.

10. Verfahren (100) nach Anspruch 9, wobei ein erstes Machine Learning-Modell (5a) verwendet wird, um zu bestimmen, von wo die nächste Aktion (3) erhalten werden soll, und die nächste Aktion (3) in dem Ausmaß, in dem sie von einem Machine Learning-Modell (5, 5b) erhalten werden soll, von einem zweiten Machine Learning-Modell (5b) erhalten wird.

11. Verfahren (100) nach Anspruch 9, wobei ein einziges Machine Learning-Modell (5) verwendet wird, um eine zweite Komponente (3b) der nächsten Aktion (3) zu erhalten sowie um zu bestimmen, ob und inwieweit diese mit einer ersten Komponente (3a) der nächsten Aktion (3), die aus der vorgegebenen Steuerungsstrategie (4) erhalten wurde, aggregiert werden soll.

12. Verfahren (100) nach einem der Ansprüche 9 bis 11, wobei das Aggregieren (170) der ersten Komponente (3a) und der zweiten Komponente (3b) umfasst:
• eine gewichtete Summe der ersten Komponente (3a) und der zweiten Komponente (3b) zu bilden (171); und/oder
• Teile der ersten Komponente (3a), die nicht durch entsprechende Teile der zweiten Komponente (3b) ersetzt werden, in der aggregierten nächsten Aktion (3) beizubehalten (172).

13. Computerprogramm, das maschinenlesbare Anweisungen umfasst, die, wenn sie von einem oder mehreren Computern ausgeführt werden, bewirken, dass der eine oder die mehreren Computer ein Verfahren (100, 200) gemäß einem der Ansprüche 1 bis 12 ausführen.

14. Ein nicht-flüchtiges maschinenlesbares Speichermedium und/oder ein Download-Produkt mit dem Computerprogramm nach Anspruch 13.

15. Ein oder mehrere Computer mit dem Computerprogramm nach Anspruch 13 und/oder mit dem nicht-flüchtigen Speichermedium und/oder Download-Produkt nach Anspruch 14.

## Revendications

1. Procédé (200) mis en œuvre par ordinateur pour entraîner un modèle (5, 5a, 5b) d'apprentissage automatique permettant de prédire s'il convient de s'écarter d'une stratégie (4) de commande normale donnée d'une installation industrielle (1) qui associe un état actuel (1a) de l'installation (1) à une ou plusieurs actions (3) modifiant le comportement de l'installation (1) ou d'une partie de celle-ci, et dans l'affirmative, quelle action (3) modifiant le comportement de l'installation (1) ou d'une partie de celle-ci doit être effectuée, le procédé comprenant les étapes de :
• fourniture (210) d'enregistrements (2a) d'apprentissage de variables (2) d'état qui caractérisent des états (1a) d'une installation industrielle (1) ou d'une partie de celle-ci ;
• fourniture (220) d'étiquettes (6) indiquant si, en réponse auxdits états (1a), il convient de s'écarter d'une stratégie (4) de commande normale donnée et, dans l'affirmative, quelle action (3) modifiant le comportement de l'installation (1) ou d'une partie de celle-ci doit être effectuée, les actions (3) indiquées par les étiquettes (6) étant sélectionnées et/ou pondérées (222) en fonction de leur caractère bénéfique pour un objectif prédéterminé concernant l'installation (1) dans son ensemble ou une partie de celle-ci ;
• l'association (230), par le modèle (5, 5a, 5b) d'apprentissage automatique, d'enregistrements (2a) d'apprentissage à des prédictions (7) indiquant si on va s'écarter d'une stratégie (4) de commande normale et dans l'affirmative, quelle action (3) modifiant le comportement de l'installation (1) ou une partie de celle-ci va être effectuée ;
• la notation (240), au moyen d'une fonction (8) de coût prédéterminée, du degré auquel la prédiction (7) par le modèle (5, 5a, 5b) d'apprentissage automatique correspond à l'étiquette (6) de l'enregistrement (2a) d'apprentissage considéré ; et
• l'optimisation (250) de paramètres (9) qui caractérisent le comportement du modèle (5, 5a, 5b) d'apprentissage automatique avec pour but que, lorsque des enregistrements (2a) d'apprentissage supplémentaires seront traités par le modèle (5, 5a, 5b) d'apprentissage automatique, il en résulte une meilleure notation (8a) par la fonction (8) de coût.

2. Procédé (200) selon la revendication 1, les enregistrements (2a) d'apprentissage caractérisant des états passés (1a) de l'installation industrielle (1) ou d'une partie de celle-ci, et les étiquettes (6) indiquant spécifiquement (221) si un opérateur de l'installation a pris le contrôle manuel de l'installation (1), et dans l'affirmative, quelle action (3) qui modifie le comportement de l'installation industrielle (1) ou d'une partie quelconque de celle-ci l'opérateur a effectué.

3. Procédé (200) selon l'une quelconque des revendications 1 à 2, dans lequel est évalué (222a), à partir d'enregistrements passés et/ou simulés du comportement que l'installation (1) ou une partie de celle-ci a montré en réponse à une action (3), le degré auquel cette action (3) est bénéfique pour l'objectif prédéterminé.

4. Procédé (200) selon l'une quelconque des revendications 1 à 3, l'action (3) dans une étiquette (6) étant agrégée et/ou extrapolée (222b) à partir d'actions passées et/ou simulées et de leurs effets bénéfiques vers l'objectif prédéterminé.

5. Procédé (200) selon l'une quelconque des revendications 1 à 4, l'objectif prédéterminé comprenant spécifiquement une ou plusieurs actions parmi :
• le fait de ramener l'installation (1) ou une partie de celle-ci dans un état où elle peut être contrôlée à nouveau par la stratégie (4) de commande donnée ;
• la minimisation du coût d'exploitation de l'installation (1) ou d'une partie de celle-ci ;
• la minimisation de la consommation d'énergie, de combustible ou d'un autre consommable pendant le fonctionnement de l'installation (1) ou d'une partie de celle-ci ;
• la minimisation du nombre d'alarmes déclenchées par l'installation (1) ou une partie de celle-ci ;
• la minimisation de l'émission d'au moins un polluant ou d'autres déchets provenant de l'installation (1) ou d'une partie de celle-ci ; et
• la maximisation de la durée de vie restante de l'installation (1) ou d'une partie de celle-ci, et/ou du temps restant jusqu'à ce qu'un prochain entretien ou arrêt de l'installation (1) ou d'une partie de celle-ci soit échu.

6. Procédé (200) selon l'une quelconque des revendications 1 à 5, l'action (3) qui modifie le comportement de l'installation (1) ou d'une partie de celle-ci comprenant spécifiquement une ou plusieurs actions parmi :
• la fixation d'une valeur de consigne d'un contrôleur de bas niveau qui commande l'installation (1) ou une partie de celle-ci dans le but de maintenir au moins une variable (2) d'état de l'installation (1) ou d'une partie de celle-ci à la valeur de consigne ou à proximité de celle-ci ;
• la mise en marche ou l'arrêt d'un équipement dans l'installation (1) ; et
• l'ouverture ou la fermeture d'une soupape ou d'un papillon.

7. Procédé (200) selon l'une quelconque des revendications 1 à 6, l'installation industrielle (1) comprenant spécifiquement une installation d'incinération de déchets, une centrale électrique, une usine chimique ou une installation de production et/ou une raffinerie de pétrole ou de gaz.

8. Procédé (200) selon la revendication 7 en plus de l'une quelconque des revendications 1 à 5, l'objectif prédéterminé comprenant une ou plusieurs actions parmi :
• la minimisation de l'utilisation d'au moins un brûleur alimenté par combustible servant à compléter la combustion des déchets à incinérer ; et
• la minimisation d'une accumulation de suies et/ou d'un autre contaminant dans un four pendant l'incinération des déchets dans ce four.

9. Procédé (100, 200) selon l'une quelconque des revendications 1 à 8, comprenant en outre les étapes consistant, sur la base d'un ou de plusieurs modèles (5, 5a, 5b) d'apprentissage automatique entrainés au cours du procédé (200), à :
• acquérir (110) un ensemble de variables (2) d'état qui caractérisent l'état présent (1a) de l'installation (1) ;
• faire déterminer (120), par un modèle (5, 5a) d'apprentissage automatique entrainé, à partir des variables (2) d'état ou d'un sous-ensemble de celles-ci, si une action suivante (3) qui modifie le comportement de l'installation (1) est à obtenir uniquement à partir de la stratégie (4) de commande donnée, uniquement à partir d'un modèle (5, 5b) d'apprentissage automatique, ou à la fois à partir de la stratégie (4) de commande donnée et du modèle (5, 5b) d'apprentissage automatique ;
• en réponse à une détermination (120a) selon laquelle l'action suivante (3) doit être obtenue uniquement à partir de la stratégie (4) de commande donnée, faire associer (130) les variables (2) d'état ou un sous-ensemble de celles-ci à cette action suivante (3) par la stratégie (4) de commande donnée ;
• en réponse à une détermination (120b) selon laquelle l'action suivante (3) doit être obtenue uniquement à partir d'un modèle d'apprentissage automatique, faire associer (140) les variables (2) d'état ou un sous-ensemble de celles-ci à cette prochaine action (3) par le modèle (5, 5b) d'apprentissage automatique ;
• en réponse à une détermination (120c) selon laquelle l'action suivante (3) doit être obtenue à la fois à partir de la stratégie donnée (4) et du modèle (5, 5b) d'apprentissage automatique,
o faire associer (150) les variables (2) d'état ou un sous-ensemble de celles-ci à une première composante (3a) de l'action suivante (3) par la stratégie (4) de commande donnée,
∘ faire associer (160) les variables (2) d'état ou un sous-ensemble de celles-ci à une deuxième composante (3b) de l'action suivante (3) par le modèle (5, 5b) d'apprentissage automatique, et
∘ agréger (170) la première composante (3a) et la deuxième composante (3b) pour former l'action suivante (3) ; et
• fournir (180) l'action suivante (3) déterminée à l'installation industrielle (1) ou à une partie quelconque de celle-ci pour exécution,
le modèle (5, 5b) d'apprentissage automatique entrainé étant choisi parmi une pluralité de modèles d'apprentissage automatique entrainés sur la base d'un objectif prédéterminé pour l'installation dans son ensemble ou une partie quelconque de celle-ci.

10. Procédé (100) selon la revendication 9, un premier modèle (5a) d'apprentissage automatique étant utilisé pour déterminer à partir d'où l'action suivante (3) doit être obtenue, et dans la mesure où l'action suivante (3) doit être obtenue à partir d'un modèle (5, 5b) d'apprentissage automatique, celle-ci étant obtenue à partir d'un second modèle (5b) d'apprentissage automatique.

11. Procédé (100) selon la revendication 9, un seul modèle d'apprentissage automatique (5) étant utilisé pour obtenir une deuxième composante (3b) de l'action suivante (3) ainsi que si et dans quelle mesure celle-ci doit être agrégée avec une première composante (3a) de l'action suivante (3) obtenue à partir de la stratégie (4) de commande donnée.

12. Procédé (100) selon l'une quelconque des revendications 9 à 11, l'agrégation (170) de la première composante (3a) et de la deuxième composante (3b) comprenant :
• la formation (171) d'une somme pondérée de la première composante (3a) et de la deuxième composante (3b) ; et/ou
• le maintien (172) de portions de la première composante (3a) qui ne sont pas remplacées par des portions correspondantes de la deuxième composante (3b) dans l'action suivante (3) agrégée.

13. Programme d'ordinateur, comprenant des instructions lisibles par machine qui, lorsqu'elles sont exécutées par un ou plusieurs ordinateurs, amènent l'ordinateur ou les ordinateurs à réaliser un procédé (100, 200) selon l'une quelconque des revendications 1 à 12.

14. Support de stockage non transitoire lisible par machine et/ou produit à télécharger, pourvu du programme d'ordinateur selon la revendication 13.

15. Ordinateur(s) pourvu(s) du programme d'ordinateur selon la revendication 13 et/ou du support de stockage non transitoire et/ou du produit de téléchargement selon la revendication 14.
